# EUROPEAN PATENT APPLICATION

(11) **EP 4 783 401 A1**
(43) Date of publication of application: **29.07.2026**
(21) Application number: 24892624.8
(22) Date of filing: 15.03.2024
(51) Int. Cl.: H02J 3/36, H02J 3/38, H02H 7/26

(54) **OFFSHORE WIND POWER DIRECT CURRENT TRANSMISSION SYSTEM**

(30) Priority: 20.11.2023 CN 202311554951
(71) Applicant: ELECTRIC POWER RESEARCH INSTITUTE, CHINA SOUTHERN POWER GRID, Guangzhou, Guangdong 510663 (CN); China Southern Power Grid Company Limited, Guangzhou, Guangdong 510663 (CN)
(72) Inventor: CAI, Xipeng, Guangzhou, Guangdong 510663 (CN); ZOU, Changyue, Guangzhou, Guangdong 510663 (CN); LU, Yuxin, Guangzhou, Guangdong 510663 (CN); LI, Yan, Guangzhou, Guangdong 510663 (CN); ZHAO, Xiaobin, Guangzhou, Guangdong 510663 (CN); YUAN, Zhiyong, Guangzhou, Guangdong 510663 (CN); PENG, Faxi, Guangzhou, Guangdong 510663 (CN); QIAO, Xuebo, Guangzhou, Guangdong 510663 (CN); HOU, Ting, Guangzhou, Guangdong 510663 (CN); LI, Lingfei, Guangzhou, Guangdong 510663 (CN); HUANG, Yihong, Guangzhou, Guangdong 510663 (CN); SHI, Youjie, Guangzhou, Guangdong 510663 (CN); XU, Yiliang, Guangzhou, Guangdong 510663 (CN)
(74) Representative: von Hirschhausen, Helge
(86) International application number: PCT/CN2024/081851
(87) International publication number: WO 2025/107457

(57) **Abstract**

An offshore wind power direct current transmission system, relating to the technical field of direct current power transmission. The system comprises an onshore direct current switch station, a plurality of offshore converter stations, and a plurality of onshore converter units; alternating current sides of the offshore converter stations are connected to wind turbine generators, and direct current sides of the offshore converter stations are connected to an input side of a bus bar of the onshore direct current switch station by means of direct current cables; an output side of the bus bar is connected to the onshore converter units by means of direct current overhead lines, and direct current circuit breakers are arranged on at least one of the input side and the output side of the bus bar; and direct current sides of the onshore converter units are connected to the direct current overhead lines by means of direct current high-speed parallel switches, each direct current overhead line is connected to one or more onshore converter units, and an alternating current side of each onshore converter unit is connected to one load center, wherein each offshore converter station uses a half-bridge MMC topological structure, and each onshore converter unit uses a topological structure having direct current fault clearing capability. The present application can realize reliable and low-cost ultra-large capacity direct current transmission.

## Description

This application claims the priority to Chinese Patent Application No. 202311554951.9, titled "OFFSHORE WIND POWER DIRECT CURRENT TRANSMISSION SYSTEM", filed on November 20, 2023 with the China National Intellectual Property Administration, which is incorporated herein by reference in its entirety.

### FIELD

The present disclosure relates to the technical field of direct-current power transmission, and in particular to a system for direct-current transmission of offshore wind power.

### BACKGROUND

In recent years, to promote energy transition, China has implemented policies strongly supporting the development and utilization of offshore wind power. The development of the offshore wind power exhibits a trend from small-scale demonstrations in nearshore, shallow-water areas to large-scale centralized development in far-offshore, deep-water areas. Transmission methods for connecting the offshore wind power to the onshore power grid include high-voltage alternating current transmission and high-voltage direct current transmission. The high-voltage alternating current transmission is suitable for connecting nearshore wind power. When the offshore wind power is transmitted to a location beyond a certain distance from the shore, issues such as excessive charging power leading to voltage rise that requires compensation, and overvoltage issues exist in long-distance alternating current cable transmission. The high-voltage alternating current transmission struggles to meet the demands of transmitting high-capacity, long-distance offshore wind power and is also costly.

The high-voltage direct current transmission offers advantages such as no need for synchronization for the onshore power grid, long transmission distances, and flexible operational control, and is suitable for high-capacity and long-distance power transmission scenarios. Flexible direct-current transmission without commutation failure issues allows independent regulation of active power and reactive power, exhibits low harmonic levels, and is currently the mainstream method for transmitting large-scale far-offshore wind power to the onshore power grid. When achieving ultra-high-capacity transmission, a multi-terminal flexible direct current transmission solution is required. However, stable transmission of ultra-high-capacity power is difficult to achieve with the currently-used direct current transmission system architecture.

### SUMMARY

A system for direct-current transmission of offshore wind power is provided according to embodiments of the present disclosure. The system is capable of achieving reliable and low-cost ultra-high-capacity direct current transmission and enhancing the system stability.

A system for direct-current transmission of offshore wind power is provided according to the present disclosure. The system includes: an onshore direct-current switch station, multiple offshore converter stations, and multiple onshore converter units. An alternating-current side of each offshore converter station of the multiple offshore converter stations is configured to connect a wind turbine, a direct-current side of the offshore converter station is connected to, via a direct-current cable, an input side of a busbar of the onshore direct-current switch station. An output side of the busbar is connected to direct-current sides of the multiple onshore converter units via direct-current overhead lines, the input side and/or the output side of the busbar is provided with direct-current circuit breakers. The direct-current side of each onshore converter unit of the multiple onshore converter units is connected to the direct-current overhead line via a direct-current high-speed parallel switch, the direct-current overhead line in each loop is connected to one or more onshore converter units of the multiple onshore converter units, and an alternating-current side of the onshore converter unit is configured to connect a load center. A half-bridge MMC topology is employed in each of the multiple offshore converter stations, and a topology which is capable of clearing a direct-current fault is employed in each of the multiple onshore converter units.

In an embodiment, each of the multiple offshore converter stations and each of the multiple onshore converter units adopt symmetrical monopole connection. The input side of the busbar is provided with the direct-current circuit breakers which are connected to the direct-current cables. The output side of the busbar is directly connected to the direct-current overhead lines, or the output side of the busbar is connected to the direct-current overhead lines via another direct-current circuit breakers, or the output side of the busbar is connected to the direct-current overhead lines via alternating-current circuit breakers.

In an embodiment, when the output side of the busbar is directly connected to the direct-current overhead lines or is connected to the direct-current overhead lines via alternating-current circuit breakers, direct-current energy dissipation apparatuses are provided between a positive terminal and a negative terminal of the busbar. A first terminal of each direct-current energy dissipation apparatus of the direct-current energy dissipation apparatuses is connected to the positive terminal of the busbar via the direct-current cable which is provided with the direct-current circuit breaker, and a second terminal of the direct-current energy dissipation apparatus is connected to the negative terminal of the busbar via another direct-current cable which is provided with the direct-current circuit breaker.

In an embodiment, when the output side of the busbar is connected to the direct-current overhead lines via another direct-current circuit breakers, a direct-current energy dissipation apparatus is provided between a positive terminal and a negative terminal of the busbar.

In an embodiment, each of the multiple offshore converter stations and each of the multiple onshore converter units adopt bipolar connection, both a positive terminal and a negative terminal of the busbar are provided with the direct-current circuit breakers at the input side of the busbar which are connected to direct-current cables, a neutral terminal of the busbar is provided with alternating-current circuit breakers at the input side of the busbar which are connected to another direct-current cables. The positive terminal, the negative terminal, and the neutral terminal of the busbar at the output side of the busbar are directly connected to all direct-current cables, or the positive terminal and the negative terminal of the busbar are connected to direct-current overhead lines via the direct-current circuit breakers at the output side of the busbar and the neutral terminal of the busbar is provided with the alternating-current circuit breakers at the output side of the busbar which are connected to another direct-current overhead lines.

In an embodiment, each of the multiple offshore converter stations and each of the multiple onshore converter units adopt symmetrical monopole connection, the input side of the busbar is provided with the direct-current high-speed parallel switches which are connected to the direct-current cables, and the output side of the busbar is provided with the direct-current circuit breakers which are connected to the direct-current overhead lines.

In an embodiment, each of the multiple offshore converter stations and each of the multiple onshore converter units adopt bipolar connection, both a positive terminal and a negative terminal of the busbar are provided with the direct-current high-speed parallel switches at the input side of the busbar which are connected to direct-current cables, a neutral terminal of the busbar is provided with alternating-current circuit breakers at the input side of the busbar which are connected to another direct-current cables. The positive terminal and the negative terminal of the busbar are connected to direct-current overhead lines via the direct-current circuit breakers at the output side of the busbar. The neutral terminal of the busbar is provided with the alternating-current circuit breakers at the output side of the busbar which are connected to another direct-current overhead lines.

In an embodiment, a direct-current energy dissipation apparatus is provided between the positive terminal and the negative terminal of the busbar.

In an embodiment, in response to one direct-current overhead line of the direct-current overhead lines being connected to two or more onshore converter units of the multiple onshore converter units, the two or more onshore converter units which are connected to the direct-current overhead line are connected with each other via an overhead line which is provided with a direct-current high-speed parallel switch.

In an embodiment, the alternating-current sides of the two or more onshore converter units are connected with each other.

It can be seen from the above technical solutions that the embodiments of the present disclosure have the following advantages.

The system for direct-current transmission of offshore wind power according to the present disclosure includes an onshore direct-current switch station, multiple offshore converter stations, and multiple onshore converter units. A half-bridge MMC topology is employed in each of the multiple offshore converter stations, and a topology which is capable of clearing a direct-current fault is employed in each of the multiple onshore converter units. The system transmits power via direct-current cables on the offshore side and via direct-current overhead lines on the onshore side. The offshore side and the onshore side are connected through the busbar of the onshore direct-current switch station, which reduces the transmission cost of high-capacity offshore wind power and the number of power transmission corridors, and can support transmission requirements at the multi-gigawatt scale. In addition, the input side and/or the output side of the busbar is provided with direct-current circuit breakers to achieve fault isolation. Thus, when the offshore converter stations lack direct-current fault clearing capability, reliable fault isolation of the system can be achieved, thereby enhancing stability of the system.

### BRIEF DESCRIPTION OF THE DRAWINGS

To clearly describe technical solutions in the embodiments of the present disclosure or in the related technology, drawings to be used in the description of the embodiments or the related technology are briefly introduced hereinafter. Apparently, the drawings described below show merely some embodiments of the present disclosure, and those skilled in the art may obtain other drawings based on the drawings without any creative effort.
FIG. 1 is a schematic structural diagram of a system for direct-current transmission of offshore wind power according to an embodiment of the present disclosure;
FIG. 2 is a schematic diagram of a topology of an offshore converter station which employs symmetrical monopole connection according to an embodiment of the present disclosure;
FIG. 3 is a schematic diagram of a topology of an onshore converter unit which employs symmetrical monopole connection according to an embodiment of the present disclosure;
FIG. 4 is a schematic structural diagram of a system for direct-current transmission of offshore wind power employing symmetric monopole connection with single-circuit overhead lines according to an embodiment of the present disclosure;
FIG. 5 is a schematic structural diagram of a system for direct-current transmission of offshore wind power employing symmetric monopole connection with multi-circuit overhead lines according to an embodiment of the present disclosure;
FIG. 6 is a schematic structural diagram of a system for direct-current transmission of offshore wind power employing symmetric monopole connection with single-circuit overhead lines according to another embodiment of the present disclosure;
FIG. 7 is a schematic structural diagram of a system for direct-current transmission of offshore wind power employing bipolar connection with single-circuit overhead lines according to an embodiment of the present disclosure;
FIG. 8 is a schematic structural diagram of a system for direct-current transmission of offshore wind power employing bipolar connection with multi-circuit overhead lines according to an embodiment of the present disclosure;
FIG. 9 is a schematic structural diagram of a system for direct-current transmission of offshore wind power employing bipolar connection with multi-circuit overhead lines according to another embodiment of the present disclosure;
FIG. 10 is a schematic structural diagram of a system for direct-current transmission of offshore wind power employing symmetric monopole connection with multi-circuit overhead lines according to another embodiment of the present disclosure; and
FIG. 11 is a schematic structural diagram of a system for direct-current transmission of offshore wind power employing bipolar connection with multi-circuit overhead lines according to another embodiment of the present disclosure.

### DETAILED DESCRIPTION

Hereinafter technical solutions in embodiments of the present disclosure are described clearly and completely in conjunction with the drawings in the embodiments of the present disclosure. Apparently, the described embodiments are only some rather than all embodiments of the present disclosure. Based on the embodiments of the present disclosure, all other embodiments obtained by those skilled in the art without any creative effort fall into the protection scope of the present disclosure.

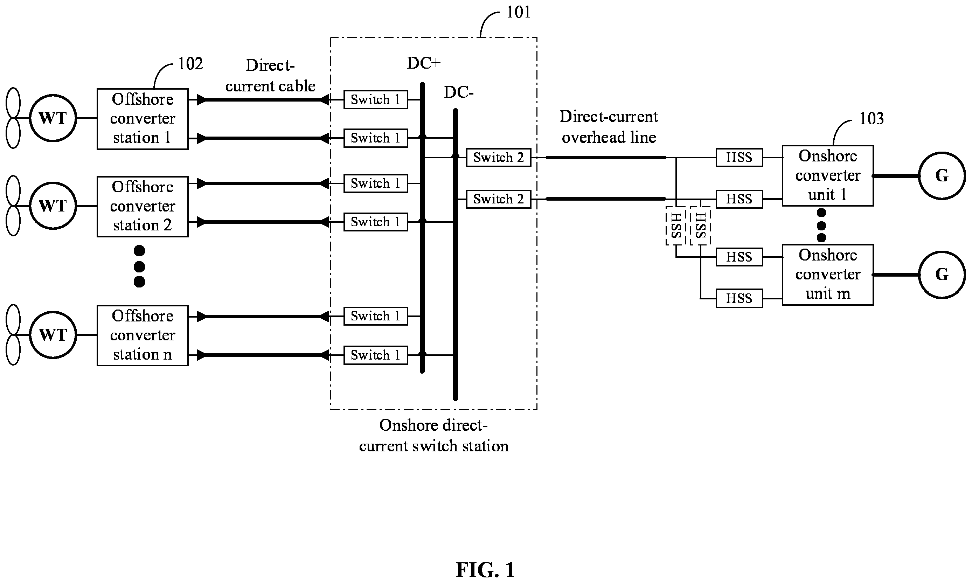

As shown in FIG. 1, a system for direct-current transmission of offshore wind power is provided according to an embodiment of the present disclosure. The system includes an onshore direct-current switch station 101, multiple offshore converter stations 102, and multiple onshore converter units 103. An alternating-current side of each offshore converter station 102 of the multiple offshore converter stations 102 is configured to connect a wind turbine WT, a direct-current side of the offshore converter station 102 is connected to, via a direct-current cable, an input side of a busbar of the onshore direct-current switch station 101. An output side of the busbar is connected to direct-current sides of the multiple onshore converter units 103 via direct-current overhead lines, the input side and/or the output side of the busbar (that is, switches 1 and/or switches 2) is provided with direct-current circuit breakers DCCB. The direct-current side of each onshore converter unit 103 of the multiple onshore converter units 103 is connected to the direct-current overhead line via a direct-current high-speed parallel switch HSS, the direct-current overhead line in each loop is connected to one or more onshore converter units 103 of the multiple onshore converter units 103, and an alternating-current side of the onshore converter unit 103 is configured to connect a load center G. A half-bridge MMC topology is employed in each of the multiple offshore converter stations 102, and a topology which is capable of clearing a direct-current fault is employed in each of the multiple onshore converter units 103.

The direct-current cables include direct-current submarine cables and/or direct-current land cables. Since the busbar may be located in an onshore area at a certain distance from the coastline, direct-current submarine cables are employed for offshore transmission, and direct-current land cables are used for transmission between the coastline and the busbar.

In some embodiments, an onshore converter unit refers to an onshore converter station. In some other embodiments, an onshore converter unit refers to a single converter unit within an individual onshore converter station.

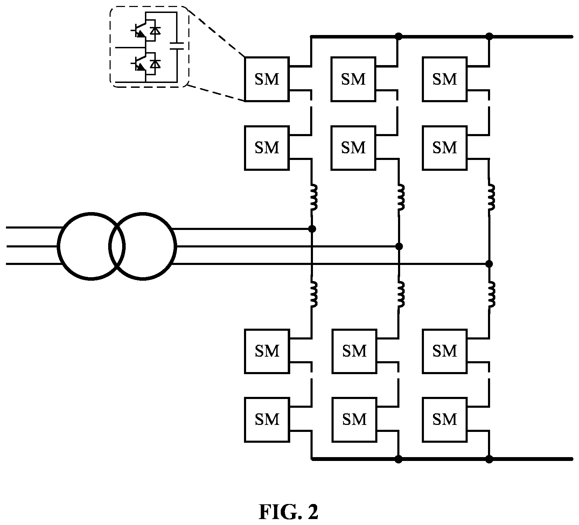

The Modular Multilevel Converter (MMC) is a voltage-source converter, and core components of the MMC is sub-modules connected in series within its bridge arms. The half-bridge MMC topology refers to a topology in which half-bridge sub-modules are employed. The half-bridge MMC topology is widely used in systems for direct-current transmission of offshore wind power due to its low cost and broad applicability. However, the half-bridge sub-modules lack the capability to clear direct-current faults. Once a fault occurs in the direct-current line of a flexible direct-current transmission system, converters and energy storage components at the direct-current side rapidly discharge, causing the fault current to reach the withstand limit of power electronic devices within milliseconds, thereby threatening safe operation of devices and the system. The direct-current circuit breaker DCCB enables rapid clearing and isolation of a direct-current fault. Referring to FIG. 2 (taking symmetric monopole connection as an example), in this embodiment, the offshore converter employs a half-bridge MMC topology and lacks direct-current fault clearing capability. By providing the input side and/or the output side of the busbar of the onshore direct-current switch station 101 with direct-current circuit breakers DCCB, when a direct-current fault occurs, fault isolation can be achieved through the direct-current circuit breakers DCCB, enhancing operational stability of the system.

In addition, in this embodiment, a transmission method of employing direct-current cables on the offshore side and direct-current overhead lines on the onshore side is proposed. Compared with the method of using direct-current land cables for onshore power transmission in Europe, this method can greatly reduce costs. Compared with the current practice in China of using alternating-current overhead lines for onshore power transmission, the number of power transmission corridors can be reduced in transmission of high-capacity offshore wind power. Within capacity limits, a single-circuit direct-current overhead line can be connected to multiple onshore converter units 103, further reducing the number of power transmission corridors and the costs. In this embodiment, the onshore direct-current switch station 101 is established on land to connect the direct-current cables and the direct-current overhead lines, and the input side and/or the output side of the busbar is provided with direct-current circuit breakers DCCB, to achieve reliable fault clearance. Therefore, to reduce costs, the direct-current overhead lines are connected to the direct-current sides of the multiple onshore converter units 103 via the direct-current high-speed parallel switches HSS, without additionally providing costly direct-current circuit breakers DCCB at the multiple onshore converter units 103.

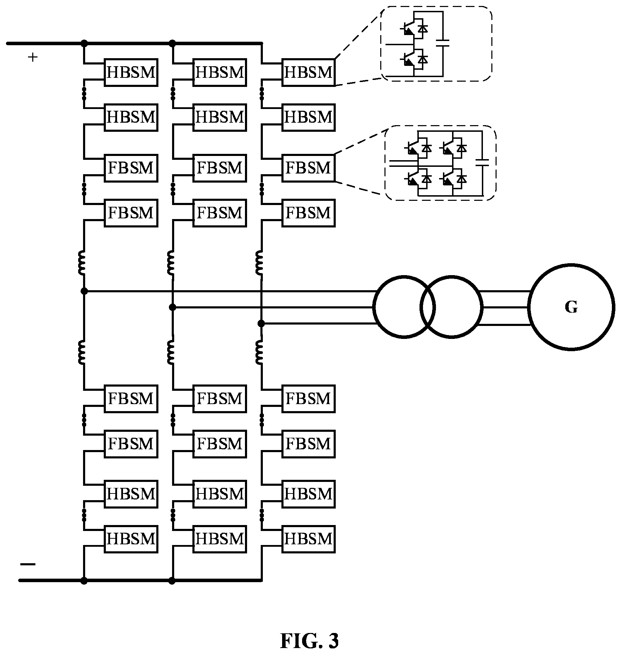

In an embodiment, each of the multiple onshore converter units 103 employs a hybrid MMC topology with full-bridge and half-bridge submodules (referring to FIG. 3, taking symmetrical monopole connection as an example), or another topology which is capable of clearing a direct-current fault.

The system for direct-current transmission of offshore wind power according to the present disclosure includes an onshore direct-current switch station 101, multiple offshore converter stations 102, and multiple onshore converter units 103. A half-bridge MMC topology is employed in each of the multiple offshore converter stations 102, and a topology which is capable of clearing a direct-current fault is employed in each of the multiple onshore converter units 103. The system transmits power via direct-current cables on the offshore side and via direct-current overhead lines on the onshore side. The offshore side and the onshore side are connected through the busbar of the onshore direct-current switch station, which reduces the transmission cost of high-capacity offshore wind power and the number of power transmission corridors, and can support transmission requirements at the multi-gigawatt scale. In addition, the input side and/or the output side of the busbar is provided with direct-current circuit breakers DCCB to achieve fault isolation. Thus, when the offshore converter stations 102 lack direct-current fault clearing capability, reliable fault isolation of the system can be achieved, thereby enhancing stability of the system.

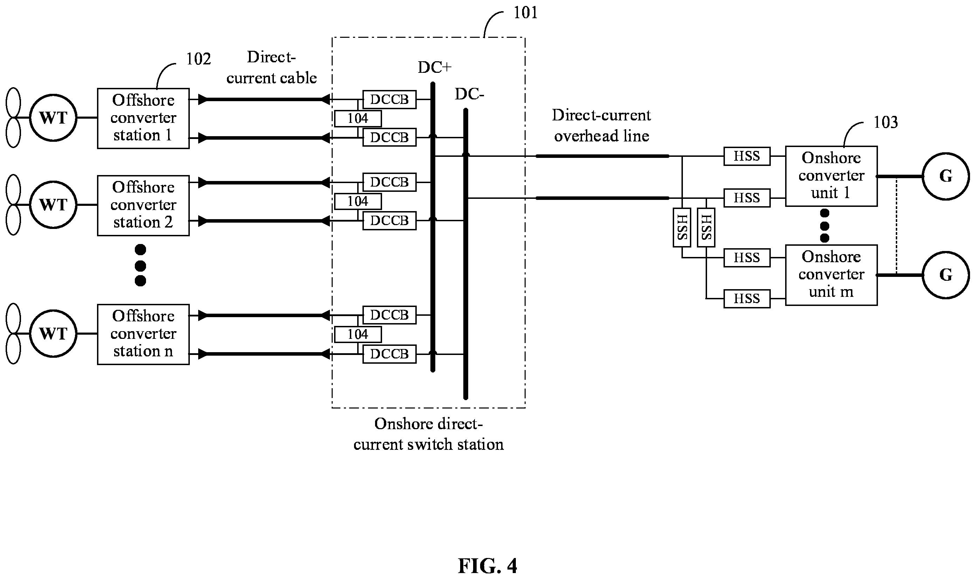

As shown in FIG. 4 (taking single-circuit direct-current overhead lines as an example), in an embodiment, each of the multiple offshore converter stations 102 and each of the multiple onshore converter units 103 adopt symmetrical monopole connection, the input side of the busbar is provided with the direct-current circuit breakers DCCB which are connected to the direct-current cables, and the output side of the busbar is directly connected to the direct-current overhead lines.

In this embodiment, since the multiple offshore converter stations 102 lack the capability to clear direct-current faults, the direct-current circuit breakers DCCB which are provided in the input side of the busbar can be utilized to interrupt a short-circuit current in the direct-current cable line where the direct-current circuit breakers DCCB are located during a fault, thereby clearing direct-current faults and ensuring the stability of the power transmission system. The multiple onshore converter units 103 inherently possess the capability to clear direct-current faults, allowing the output side of the busbar to be directly connected to the direct-current overhead lines. In this way, additional direct-current circuit breakers DCCB are not required, and the costs of the system are reduced.

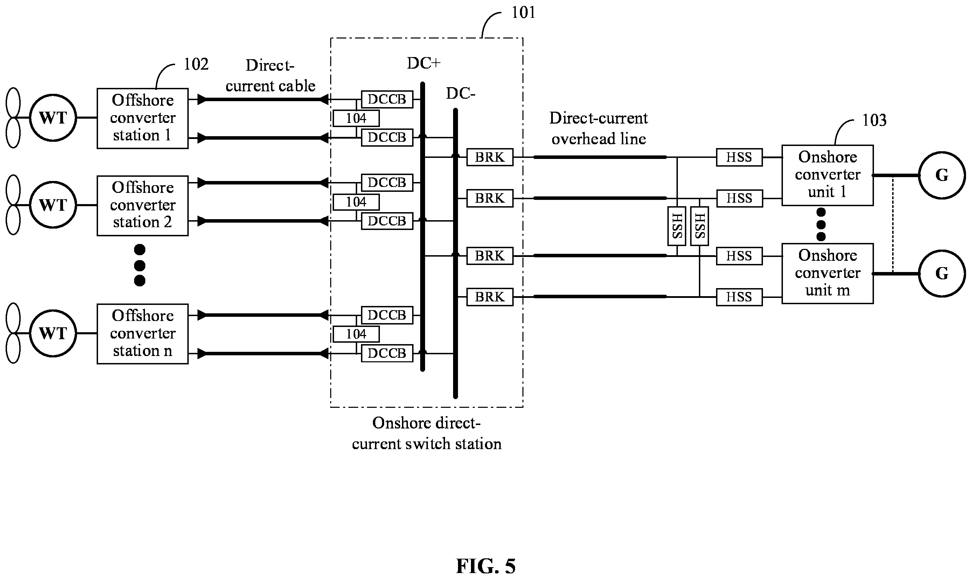

As shown in FIG. 5 (taking multi-circuit direct-current overhead lines as an example), in an embodiment, each of the multiple offshore converter stations 102 and each of the multiple onshore converter units 103 adopt symmetrical monopole connection, the input side of the busbar is provided with the direct-current circuit breakers DCCB which are connected to the direct-current cables, and the output side of the busbar is connected to the direct-current overhead lines via alternating-current circuit breakers BRK.

In this embodiment, since the multiple offshore converter stations 102 lack the capability to clear direct-current faults, the direct-current circuit breakers DCCB which are provided in the input side of the busbar can be utilized to disconnect the direct-current cable line where the direct-current circuit breakers DCCB are located during a fault, thereby clearing direct-current faults and ensuring the stability of the power transmission system. The multiple onshore converter units 103 inherently possess the capability to clear direct-current faults, and the output side of the busbar is provided with alternating-current circuit breakers BRK with low costs for connecting the direct-current overhead lines. In this way, additional direct-current circuit breakers DCCB are not required, and the costs of the system are reduced.

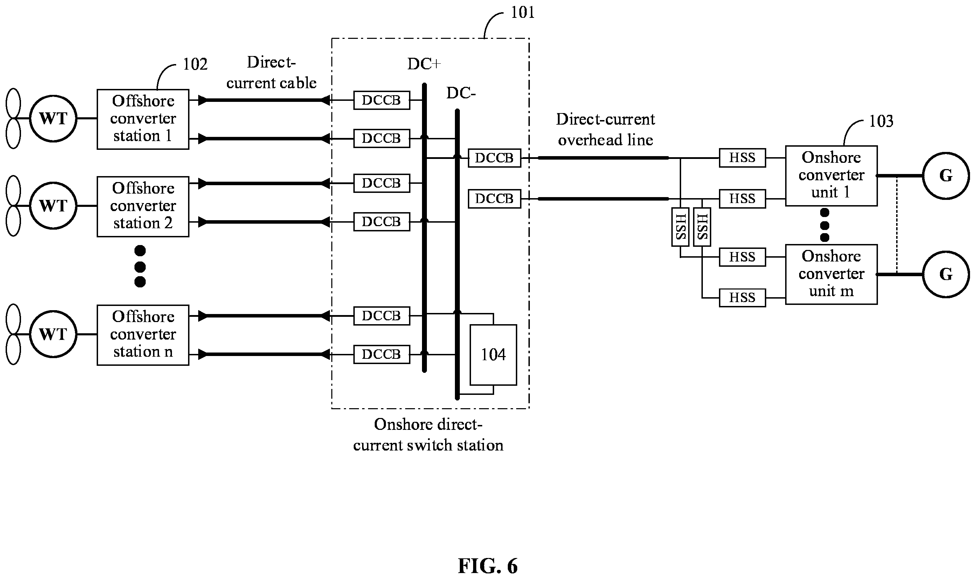

As shown in FIG. 6 (taking single-circuit direct-current overhead lines as an example), in an embodiment, each of the multiple offshore converter stations 102 and each of the multiple onshore converter units 103 adopt symmetrical monopole connection, the input side of the busbar is provided with the direct-current circuit breakers DCCB which are connected to the direct-current cables, and the output side of the busbar is connected to the direct-current overhead lines via another direct-current circuit breakers DCCB.

In this embodiment, terminals of the input side and the output side of the busbar are provided with the direct-current circuit breakers DCCB, and the direct-current circuit breakers DCCB can be utilized to disconnect the direct-current cable line or the direct-current overhead line during a fault, enhancing flexibility and reliability of fault clearance.

Referring to FIG. 4 and FIG. 5, in an embodiment, when the output side of the busbar is directly connected to the direct-current overhead lines or is connected to the direct-current overhead lines via alternating-current circuit breakers BRK, direct-current energy dissipation apparatuses 104 are provided between a positive terminal and a negative terminal of the busbar. A first terminal of each direct-current energy dissipation apparatus 104 of the direct-current energy dissipation apparatuses 104 is connected to the positive terminal DC+ of the busbar via the direct-current cable which is provided with the direct-current circuit breaker DCCB, and a second terminal of the direct-current energy dissipation apparatus 104 is connected to the negative terminal DC- of the busbar via another direct-current cable which is provided with the direct-current circuit breaker DCCB.

To further ensure the fault clearing capability of the system during a direct-current fault, the direct-current energy-consuming apparatuses 104 are provided on the offshore side. After the direct-current fault is cleared by the direct-current circuit breakers DCCB, the direct-current energy dissipation apparatuses 104 can operate at a full voltage to achieve surplus power balance during the direct-current fault.

In an embodiment, if the multiple offshore converter stations 102 or the wind turbines are provided with energy dissipation apparatuses, the energy dissipation apparatuses 104 are not required. The surplus power balance can be achieved by using the energy dissipation apparatuses provided in the multiple offshore converter stations 102 or the wind turbines. However, this method imposes high configuration requirements on the offshore converter stations 102 or the wind turbines, resulting in increased cost investment.

Referring to FIG. 6, in an embodiment, when the output side of the busbar is connected to the direct-current overhead lines via another direct-current circuit breakers DCCB, a direct-current energy dissipation apparatus 104 is provided between a positive terminal and a negative terminal of the busbar. A first terminal of the direct-current energy dissipation apparatus 104 is connected to the positive terminal DC+ of the busbar via a direct-current overhead line, and a second terminal of the direct-current energy dissipation apparatus 104 is connected to the negative terminal DC- of the busbar via a direct-current overhead line.

In this embodiment, the direct-current overhead line side is provided with direct-current circuit breakers DCCB for clearing a direct-current fault. To further ensure the fault clearing capability of the system during the direct-current fault, the direct-current energy dissipation apparatus 104 is provided between the positive terminal and the negative terminal of the busbar. After the direct-current fault is cleared by the direct-current circuit breakers DCCB, the direct-current energy dissipation apparatus 104 can operate at a full voltage to achieve surplus power balance during the direct-current fault.

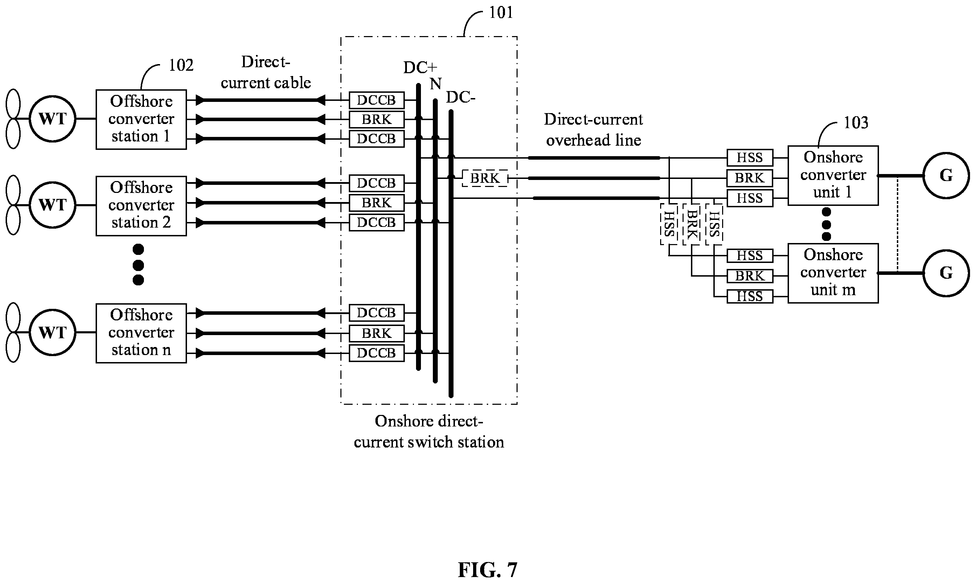

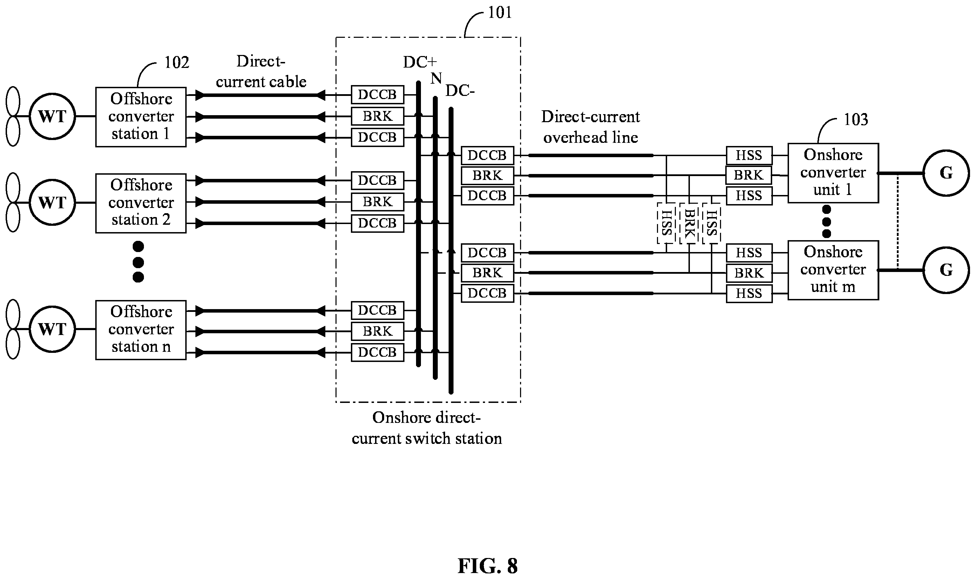

Referring to FIG. 7 and FIG. 8, in an embodiment, each of the multiple offshore converter stations 102 and each of the multiple onshore converter units 103 adopt bipolar connection, both a positive terminal DC+ and a negative terminal DC- of the busbar are provided with the direct-current circuit breakers DCCB at the input side of the busbar which are connected to direct-current cables, and a neutral terminal N of the busbar is provided with alternating-current circuit breakers BRK at the input side of the busbar which are connected to another direct-current cables. The positive terminal DC+ and the negative terminal DC- of the busbar are directly connected to the direct-current cables at the output side of the busbar, and the neutral terminal N of the busbar is directly connected to the direct-current overhead lines at the output side of the busbar. In some embodiments, the positive terminal and the negative terminal of the busbar are connected to the direct-current overhead lines via direct-current circuit breakers DCCB at the output side of the busbar, and the neutral line N of the busbar is provided with alternating-current circuit breakers BRK at the output side of the busbar which are connected to the direct-current overhead lines.

When using the bipolar connection, the fault current in the circuit can be isolated through the operation of the DCCBs in terminals. Therefore, the neutral terminal at the output side of the busbar can be provided with the alternating-current circuit breakers BRK which are connected to the direct-current overhead lines. By using alternating-current circuit breakers BRK with low costs, costs of the system can be reduced.

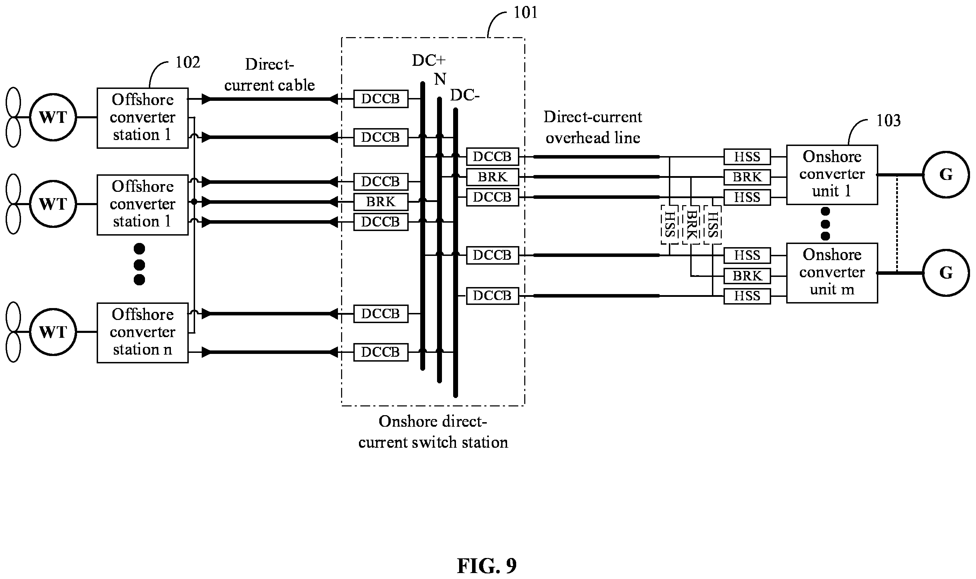

As shown in FIG. 9, in an embodiment, when each of the multiple offshore converter stations 102 and each of the multiple onshore converter units 103 adopt bipolar connection, a shared neutral line is used on the offshore side to reduce costs, and a shared neutral line is used on the onshore side to reduce costs.

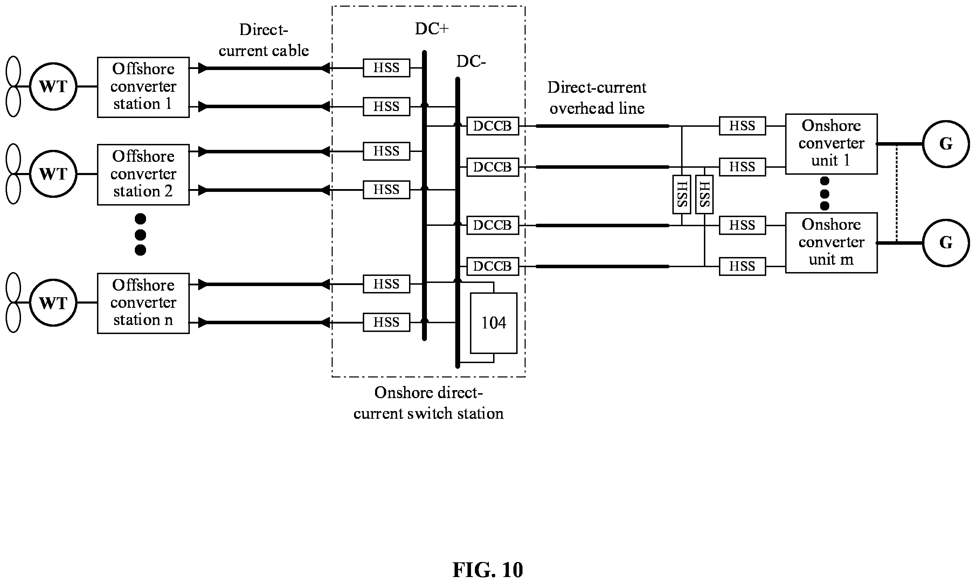

Referring to FIG. 10, in an embodiment, each of the multiple offshore converter stations 102 and each of the multiple onshore converter units 103 adopt symmetrical monopole connection, the input side of the busbar is provided with high-speed parallel switches HSS which are connected to the direct-current cables, and the output side of the busbar is provided with direct-current circuit breakers DCCB which are connected to the direct-current overhead lines.

In this embodiment, since the multiple offshore converter stations 102 lack the capability to clear a direct-current fault, direct-current circuit breakers DCCB are required to be provided in direct-current power transmission lines to clear the direct-current fault. Providing direct-current circuit breakers DCCBs on the offshore side is difficult and costly. Thus, the direct-current circuit breakers DCCB provided in the output side of the busbar can be utilized to disconnect the direct-current overhead line in the event of a fault to clear the direct-current fault, ensuring the stability of the power transmission system. The input side of the busbar can be provided with direct-current high-speed parallel switches HSS with lower costs, to coordinate with the direct-current circuit breakers DCCB on the output side for line switching, thereby reducing the quantity of direct-current circuit breakers DCCB required and costs of the system.

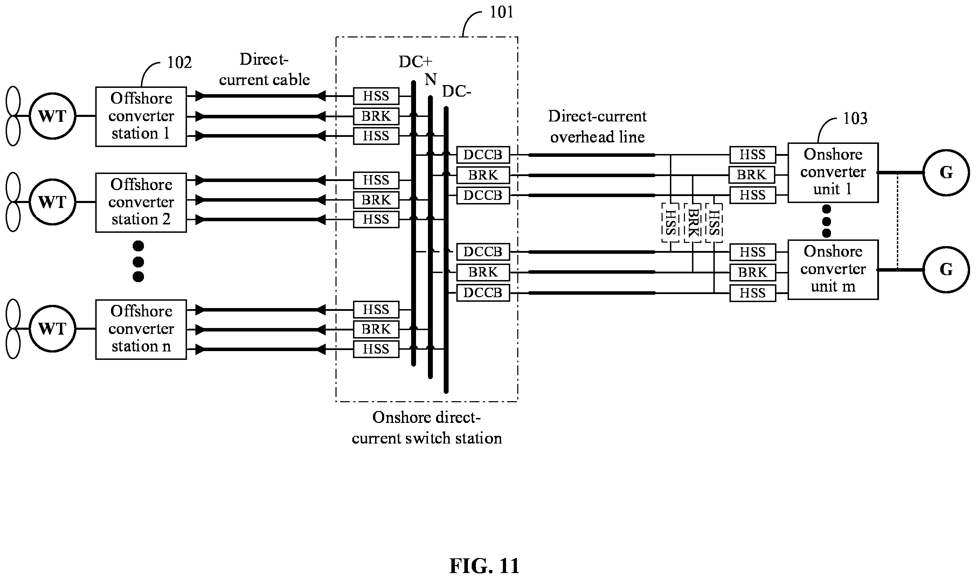

Referring to FIG. 11, in an embodiment, each of the multiple offshore converter stations 102 and each of the multiple onshore converter units 103 adopt bipolar connection, both a positive terminal and a negative terminal of the busbar are provided with the direct-current high-speed parallel switches HSS at the input side of the busbar which are connected to direct-current cables, and a neutral terminal N of the busbar is provided with alternating-current circuit breakers BRK at the input side of the busbar which are connected to another direct-current cables. The positive terminal and the negative terminal of the busbar are connected to the direct-current overhead lines via the direct-current circuit breakers DCCB at the output side of the busbar, and the neutral terminal N of the busbar is provided with the alternating-current circuit breakers BRK at the output side of the busbar which are connected to another direct-current overhead lines.

In this embodiment, when the converter stations adopt bipolar connection, since a fault in the neutral terminal is not required to be isolated, the neutral terminal N of the busbar is provided with alternating-current circuit breakers BRK at the input side of the busbar which are connected to direct-current cables, and the neutral terminal N of the busbar is provided with alternating-current circuit breakers BRK at the output side of the busbar which are connected to direct-current cables. By using the alternating-current circuit breakers BRK with low costs, costs of the system can be reduced. Since the multiple offshore converter stations 102 lack the capability to clear a direct-current fault, direct-current circuit breakers DCCB are required to be provided in direct-current power transmission lines to clear the direct-current fault. Providing direct-current circuit breakers DCCBs on the offshore side is difficult and costly. Thus, the direct-current circuit breakers DCCB provided in the output side of the busbar can be utilized to disconnect the direct-current overhead line in the event of a fault to clear the direct-current fault, ensuring the stability of the power transmission system. The input side of the busbar can be provided with direct-current high-speed parallel switches HSS with lower costs, to coordinate with the direct-current circuit breakers DCCB on the output side for line switching, thereby reducing the quantity of direct-current circuit breakers DCCB required and costs of the system.

Referring to FIG. 10, in an embodiment, a direct-current energy dissipation apparatus 104 is provided between the positive terminal and the negative terminal of the busbar. A first terminal of the direct-current energy dissipation apparatus 104 is connected to the positive terminal of the busbar, and a second terminal of the direct-current energy dissipation apparatus 104 is connected to the negative terminal of the busbar.

In this embodiment, the direct-current overhead line side is provided with direct-current circuit breakers DCCB for clearing a direct-current fault. To further ensure the fault clearing capability of the system during the direct-current fault, the direct-current energy dissipation apparatus 104 is provided between the positive terminal and the negative terminal of the busbar. After the direct-current fault is cleared by the direct-current circuit breakers DCCB, the direct-current energy dissipation apparatus 104 can operate at a full voltage to achieve surplus power balance during the direct-current fault.

Referring to FIG. 4 to FIG. 11, in an embodiment, in response to one direct-current overhead line of the direct-current overhead lines being connected to two or more onshore converter units 103 of the multiple onshore converter units 103, the two or more onshore converter units 103 which are connected to the direct-current overhead line are connected with each other via an overhead line which is provided with a direct-current high-speed parallel switch HSS.

Since the capacity of a single onshore converter unit 103 is greater than that of a single offshore converter station 102, one overhead line circuit can be simultaneously connected to multiple offshore converter stations 102. To further reduce the number of power transmission corridors, the direct-current overhead lines can adopt multi-circuit connection, meaning that one overhead line circuit can be simultaneously connected to multiple onshore converter units 103. All onshore converter units 103 connected to the direct-current overhead line in the circuit are connected with each other via an overhead line which is provided with a direct-current high-speed parallel switch HSS. The direct-current high-speed parallel switch HSS provided between any interconnected onshore converter units 103 are used to coordinate with the direct-current circuit breakers DCCB for fault isolation.

In an embodiment, the alternating-current sides of the two or more onshore converter units 103 are connected with each other.

In this embodiment, the alternating-current sides of the two or more onshore converter units 103 are connected with each other to integrate the onshore converter units 103 into the power grid constructed at load centers G. In this way, independent load allocation is not required in the onshore converter units 103. The onshore converter units 103 with their alternating-current sides interconnected and their respective connected load centers G collectively form a large-scale power grid. The large-scale power grid is capable of automatically coordinating loads internally, improving the safety and stability of power grid operation.

Finally, it should also be noted that in the present disclosure, relational terms such as first and second are only used to distinguish one entity or operation from another, and do not necessarily require or imply that any such actual relationship or order exists in these entities or operations. Furthermore, the term "comprise", "include" or any other variation thereof is intended to cover a non-exclusive inclusion, so that a process, a method, an article, or a device including a set of elements includes not only those elements, but also other elements not expressly listed or elements inherent in such a process, method, article, or device. Unless expressively limited, the statement "including a..." does not exclude the case that other similar elements may exist in the process, method, article or device including the set of elements.

Moreover, terms such as "first", "second" and the like are merely for description, and should not be construed as indicating or implying relative importance, or implicitly indicating the number of technical features being referred to. Therefore, features defined with "first" and "second" may explicitly or implicitly include at least one of the features. In the description of this specification, "multiple/a plurality of" means at least two, such as two or three, unless otherwise expressly and specifically limited. In addition, terms "and/or" used in this specification include any and all combinations of the items listed.

It should be noted that, an element being "connected" to another element may indicate that the element is directly connected to the other element, or the element is connected to the other element through an intermediate element. In addition, the "connection" in the embodiments of the present disclosure should be understood as "electrical connection", "communication connection", or the like if the connected circuits, modules, units, or the like have electrical signal or data transmission to each other.

The embodiments in the present specification are described in a progressive manner, and each of the embodiments focuses on its differences from the other embodiments. Various embodiments may be combined with each other as needed. The same or similar parts among the embodiments may be referred to each other.

The disclosed embodiments are described above so that those skilled in the art can implement or use the present disclosure. Various modifications made to the embodiments are apparent to those skilled in the art. The general principle defined herein may be implemented in other embodiments without departing from the spirit and scope of the present disclosure. Therefore, the present disclosure should not be limited to the embodiments disclosed herein, but has the widest scope in accordance to the concept and the novel features disclosed herein.

## Claims

1. A system for direct-current transmission of offshore wind power, comprising: an onshore direct-current switch station, a plurality of offshore converter stations, and a plurality of onshore converter units, wherein
an alternating-current side of each offshore converter station of the plurality of offshore converter stations is configured to connect a wind turbine, a direct-current side of the offshore converter station is connected to, via a direct-current cable, an input side of a busbar of the onshore direct-current switch station,
an output side of the busbar is connected to direct-current sides of the plurality of onshore converter units via direct-current overhead lines, terminals of the input side and/or the output side of the busbar are provided with direct-current circuit breakers,
the direct-current side of each onshore converter unit of the plurality of onshore converter units is connected to the direct-current overhead line via a direct-current high-speed parallel switch, the direct-current overhead line in each loop is connected to one or more onshore converter units of the plurality of onshore converter units, and an alternating-current side of the onshore converter unit is configured to connect a load center, and
a half-bridge MMC topology is employed in each of the plurality of offshore converter stations, and a topology which is capable of clearing a direct-current fault is employed in each of the plurality of onshore converter units.

2. The system according to claim 1, wherein each of the plurality of offshore converter stations and each of the plurality of onshore converter units adopt symmetrical monopole connection,
the input side of the busbar is provided with the direct-current circuit breakers which are connected to the direct-current cables, and
the output side of the busbar is directly connected to the direct-current overhead lines, or the output side of the busbar is connected to the direct-current overhead lines via another direct-current circuit breakers, or the output side of the busbar is connected to the direct-current overhead lines via alternating-current circuit breakers.

3. The system according to claim 2, wherein when the output side of the busbar is directly connected to the direct-current overhead lines or is connected to the direct-current overhead lines via alternating-current circuit breakers, direct-current energy dissipation apparatuses are provided between a positive terminal and a negative terminal of the busbar, and
a first terminal of each direct-current energy dissipation apparatus of the direct-current energy dissipation apparatuses is connected to the positive terminal of the busbar via the direct-current cable which is provided with the direct-current circuit breaker, and a second terminal of the direct-current energy dissipation apparatus is connected to the negative terminal of the busbar via another direct-current cable which is provided with the direct-current circuit breaker.

4. The system according to claim 2, wherein when the output side of the busbar is connected to the direct-current overhead lines via another direct-current circuit breakers, a direct-current energy dissipation apparatus is provided between a positive terminal and a negative terminal of the busbar.

5. The system according to claim 1, wherein each of the plurality of offshore converter stations and each of the plurality of onshore converter units adopt bipolar connection, both a positive terminal and a negative terminal of the busbar are provided with the direct-current circuit breakers at the input side of the busbar which are connected to direct-current cables, a neutral terminal of the busbar is provided with alternating-current circuit breakers at the input side of the busbar which are connected to another direct-current cables,
the positive terminal, the negative terminal, and the neutral terminal of the busbar at the output side of the busbar are directly connected to all direct-current cables, or
the positive terminal and the negative terminal of the busbar are connected to direct-current overhead lines via the direct-current circuit breakers at the output side of the busbar, and the neutral terminal of the busbar is provided with the alternating-current circuit breakers at the output side of the busbar which are connected to another direct-current overhead lines.

6. The system according to claim 1, wherein each of the plurality of offshore converter stations and each of the plurality of onshore converter units adopt symmetrical monopole connection, the input side of the busbar is provided with the direct-current high-speed parallel switches which are connected to the direct-current cables, and the output side of the busbar is provided with the direct-current circuit breakers which are connected to the direct-current overhead lines.

7. The system according to claim 1, wherein each of the plurality of offshore converter stations and each of the plurality of onshore converter units adopt bipolar connection, both a positive terminal and a negative terminal of the busbar are provided with the direct-current high-speed parallel switches at the input side of the busbar which are connected to direct-current cables, a neutral terminal of the busbar is provided with alternating-current circuit breakers at the input side of the busbar which are connected to another direct-current cables,
the positive terminal and the negative terminal of the busbar are connected to direct-current overhead lines via the direct-current circuit breakers at the output side of the busbar, and
the neutral terminal of the busbar is provided with the alternating-current circuit breakers at the output side of the busbar which are connected to another direct-current overhead lines.

8. The system according to any one of claims 5 to 7, wherein a direct-current energy dissipation apparatus is provided between the positive terminal and the negative terminal of the busbar.

9. The system according to any one of claims 1 to 7, wherein in response to one direct-current overhead line of the direct-current overhead lines being connected to two or more onshore converter units of the plurality of onshore converter units, the two or more onshore converter units which are connected to the direct-current overhead line are connected with each other via an overhead line which is provided with a direct-current high-speed parallel switch.

10. The system according to claim 9, wherein the alternating-current sides of the two or more onshore converter units are connected with each other.
